Europäisches Patentamt

European Patent Office

Office européen des brevets

(19)

(11) Publication number: **0 015 559**
B1

(12) **EUROPEAN PATENT SPECIFICATION**

(45) Date of publication of patent specification: 02.11.83

(51) Int. Cl.³: **F 16 L 21/04, F 16 L 55/16**

(21) Application number: 80101146.1

(22) Date of filing: 06.03.80

(54) Sealing device for a pipe joint.

(30) Priority: 06.03.79 JP 25912/79
06.03.79 JP 25914/79
06.03.79 JP 25915/79
11.06.79 JP 73231/79

(43) Date of publication of application:
17.09.80 Bulletin 80/19

(45) Publication of the grant of the patent:
02.11.83 Bulletin 83/44

(84) Designated Contracting States:
DE FR GB IT

(56) References cited:
AT - B - 237 392
DE - A - 2 063 110
DE - A - 2 102 520
DE - A - 2 440 086
DE - A - 2 752 072
DE - B - 1 289 695
GB - A - 1 200 225
US - A - 3 704 564

(73) Proprietor: Tokyo Gas Co., Ltd.
2-16, 1-chome, Yaesu, Chuo-ku
Tokyo (JP)

(73) Proprietor: Hakko Co., Ltd.
10-6, 1-chome, Takaban
Meguro-ku Tokyo (JP)

(72) Inventor: Ohtsuga, Hisao
156-12, Nagatsuda-cho
Midori-ku Yokohama-shi (JP)
Inventor: Uzawa, Kouji
2-4-8, Hibarigaoka Kita Houya-shi
Tokyo (JP)
Inventor: Sudou, Susumu
41-502 Ichoudanchi
2670 Kami Iida Totsuka-ku, Yokohama-shi (JP)
Inventor: Hirose, Tomoyoshi
2-13-2, Kyomachi Kawasaki-ku
Kawasaki-shi (JP)
Inventor: Miyao, Masafumi
3-16-4-1413, Harumi Chuo-ku
Tokyo (JP)
Inventor: Kamuro, Takashi
5-34-18, Nishimachi Kobubunji-shi
Tokyo (JP)

(74) Representative: Lehn, Werner, Dipl.-Ing. et al,
Hoffmann, Eitle & Partner Patentanwälte
Arabellastrasse 4 (Sternhaus)
D-8000 München 81 (DE)

Courier Press, Leamington Spa, England.

Sealing device for a pipe joint

This invention relates to a sealing device for forming a lining on the joint portions of pipes, comprising a tubular sleeve made of an elastic material and having end sections and an intermediate section between the end sections, said end sections of the sleeve being adapted to be brought into contact with the inner surfaces of the joint portions of the pipes, and expanding means provided in the corresponding inner surfaces of the end sections of the sleeve to cause the outer peripheral surfaces of the end sections of the sleeve to be pressed against the inner surfaces of the joint portions of the pipes.

A sealing device of this kind is already known from British Patent No. 1,200,225 where a tubular sleeve is mounted on the inner surfaces of the joint portions of two adjacent pipes. Ring-like projections are provided on the outer peripheral surfaces of the end sections of the sleeve and pressed against the inner surfaces of the joint portions of the pipes by radially outwardly expanding ring members which are fitted in the inner surfaces of the sleeve. As a result, a certain extent of sealing is assured. However, the sealing device of this patent is not satisfactory under the following sitations. Where a great earthquake occurs, there is a possibility that the pipes will be exially relatively displaced at their joint portions, or bent, with resultant opening at the joint portions of the pipes. Under these situations, there is a risk that leakage of a gas flowing through the pipe will occur.

DE—A—2.102.520 discloses a sleeve which has its periphery coated with an adhesive or impregnated with an adhesive.

DE—A—2.063.110 discloses a sleeve made of elastic material which has an intermediate section which is thinner than its end sections.

Pipes or ducts embedded in the ground suffer an inadvertent displacement during passage of a longer period due in part to the movement of the ground and the joint portions of the adjacent two pipes become slackened, involving a possible leakage of gas at the joint portions of the pipes. Under these situations, the sleeve is likely to be slipped out of the pipe along the inner surface of the pipe, causing gas leakage at the joint portions of the pipes.

The object of this invention is to provide a sealing device for a pipe joint which can reduce the possibility of leakage of a fluid such as a gas in a pipe if two adjacent pipes are displaced apart from each other at their joint portions.

In order to attain this object, an elastic foamed body impregnated with an exudable binder is provided around the outer peripheral surface of each end section of the sleeve in a groove defined by a pair of flange-like projections or ridges provided on the outer peripheral surface of the respective end section so that the foamed body can be compressed by the expanding means against the inner surface of the joint portions of the pipes to cause the binder to be squeezed out of the foamed body to permit the end sections of the sleeve to be bonded to the inner surfaces of the joint portions of the pipes, and in that said intermediate section is thinner than said end sections and is expansible in the axial direction of the sleeve. Even if the joint portions of the pipes are displaced away from each other, the end sections of the sleeve can remain fixed to the inner surfaces of the joint portions of the pipes because of the expansion of the intermediate section of the sleeve, and leakage of a fluid flowing through the pipe can be prevented. Since according to this invention the exudable binder is impregnated in the foamed body it is easier for the operator to mount the sealing device on the inner surfaces of the joint portions of the pipes. For example, coating a liquid binder directly onto the inner surfaces of the joint portions of the pipes and/or the outer peripheral surfaces of the end sections of the sleeve to attain a bond between the sleeve and the pipes is very cumbersome and uniform bonding is difficult to obtain. Where the elastic foamed body impregnated with the exudable binder is provided around the entire outer periphery of each end section of the sleeve and, when pressure is applied to the elastic foamed body, the binder is uniformly squeezed out of the elastic foamed body throughout the entire circumference of the elastic foamed body and thus a uniform and positive bond can be effected between the pipe and the sleeve to assure an air-tight and water-tight seal. The elastic foamed body as used in this invention is of a type as shown, for example, in US patent no. 3,704,564. The intermediate section of the sleeve is made thinner than the end sections of the sleeve to permit sufficient expansion of the intermediate section of the sleeve. A strengthening insert piece may be embedded in the respective end sections of the sleeve to provide added stiffness to the end sections of the sleeve. This invention can be more fully understood from the following detailed description when taken in conjunction with the accompanying drawings, in which:

Fig. 1 is a cross-sectional view of a sealing device according to a first embodiment of this invention which is mounted of the inner surface of joint portions of pipes;

Fig. 2 is an enlarged, partial, cross-sectional view of the sealing device of Fig. 1;

Fig. 3 is a front view of an expanding ring as used in the sealing device of Fig. 1;

Fig. 4(a) is an enlarged plan view showing a ring portion as encircled by a dot-dash line in Fig. 3, Fig. 4(b) is a side view of the ring portion of Fig. 4(a), and Fig. 4(c) is an exploded view of the ring portion of Fig. 4(b);

Fig. 5 is a front view of a jig for expanding the ring;

Fig. 6 is a view of a binder-impregnated elastic foamed body on a sleeve;

Fig. 7 is a view of the foamed body and sleeve of Fig. 6 with their diameter expanded;

Fig. 8 is a cross-sectional view of a sealing device according to a second embodiment of this invention which is mounted on the inner surfaces of the joint portions of pipes;

Fig. 9 is an enlarged, partial, cross-sectional view of the sealing device of Fig. 8;

Fig. 10 is a cross-sectional view of a sealing device according to a third embodiment of this invention which is mounted on the inner surfaces of the joint portions of pipes; and

Fig. 11 is an enlarged, partial, cross-sectional view of the sealing device of Fig. 10.

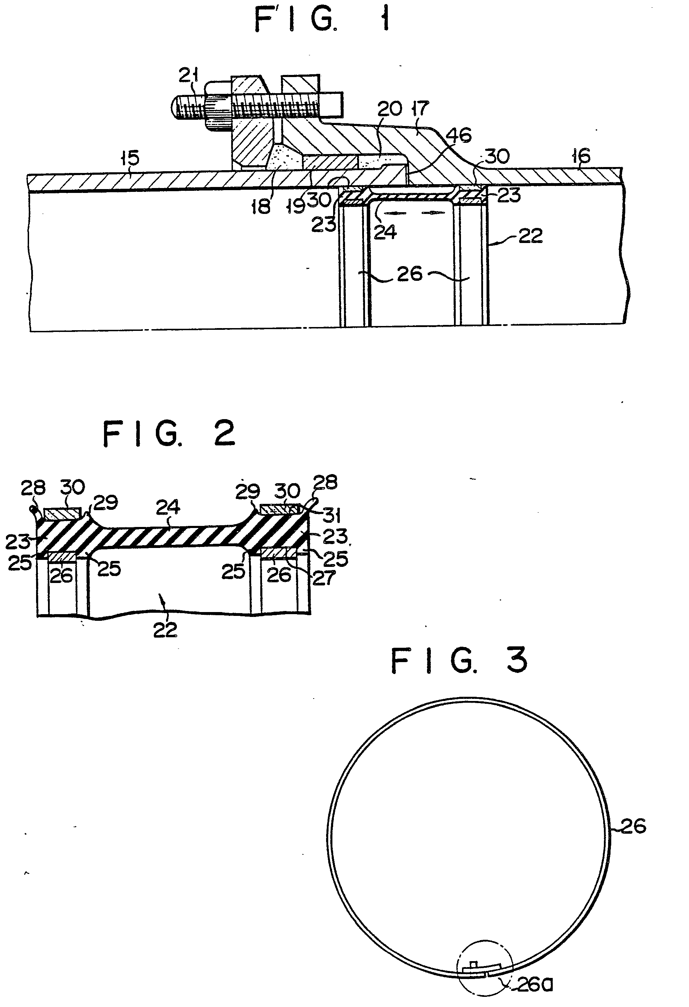

Fig. 1 shows a sealing device according to a first embodiment of this invention. 15 and 16 show large-diameter cast iron pipes as embedded as a gas supply main in the ground. The pipes are jointed together by a bolt 21 at their jointing portions with an angular rubber member 18, lead mass 19 and a fibrous packing 20 inbetween to provide an air-tight seal.

The sealing device of this invention is mounted on the inner surfaces of the joint portions 17 of the pipes 15, 16 and has a tubular sleeve 22 formed of an elastic material such as synthetic rubber. The sleeve 22 has end sections 23, 23 and an intermediate section 24 therebetween. The intermediate section 24 of the sleeve is made thinner than the end sections 23, 23 of the sleeve 22 and constructed to have elasticity in the axial direction of the sleeve 22. A groove 27 for receiving an expanding ring 26 formed of a steel metal is defined by a pair of flanges 25, 25 in the inner surface of the end sections of the sleeve 22.

A radially outwardly projecting, tapering sealing lip 28 is integrally formed on the outer peripheral surface of the sleeve 22 such that it is located immediately adjacent to the end face of the sleeve. A radially projecting smaller sealing lip 29 is formed at a location where the end section 23 of the sleeve 22 merges with the intermediate section 24 of the sleeve 22. A groove 31 for receiving a ring-like elastic foamed body or band 30 as set out below is formed on the outer peripheral surface of the end section 23 of the sleeve 22 such that it is defined between the sealing lips 28 and 29.

The ring-like elastic foamed band 30 impregnated with an exudable or fluid flowable binder is wrapped around the outer peripheral surface of the groove 31 of the end section 23 of the sleeve 22.

The foamed band 30 as used herein is an elastic synthetic resin as disclosed in US—A—3,704,564 and has continuous cells chemically stable against the impregnated binder. As a binder use is made of one of well-known organic or inorganic binders. An epoxy resin binder settable at normal temperature is recommendable as a desired binder.

Although in this embodiment use is made as the foamed band of a single band-like member rectangular in cross-section, a plurality of members may be used as such and the cross-sectional configurations is not restricted to the rectangular cross-section. All that is necessary in this invention is for the binder to be able to be squeezed out over the whole length of the foamed band when pressure is applied.

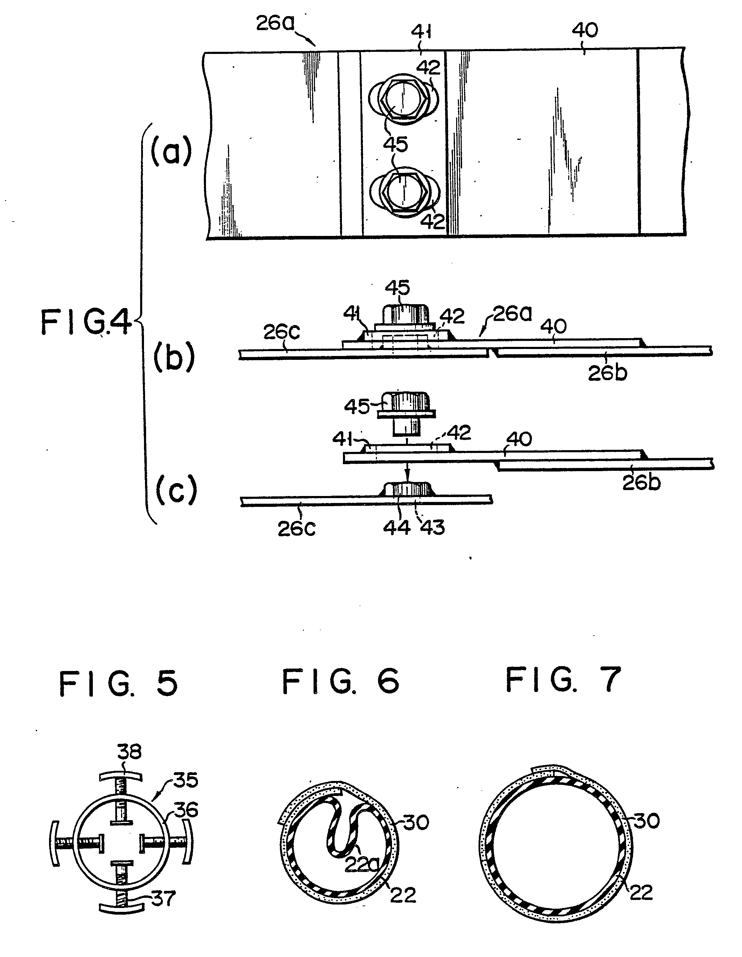

The expanding ring 26 of a predetermined diameter as generally shown in Fig. 3 is manufactured by bending a band-like metal plate into a ring-like configuration and connecting the end portions 26b, 26c of the metal plate 26 together by a joint section 26a as shown in detail in Fig. 4(a) to 4(c). In the external force-free state, the ring 26 has a springy property and is smaller in diameter than the diameter of the ring in the state as shown in Fig. 3. A jig 35 as shown in Fig. 5 is used to connect the end portions 26b, 26c of the metal plate together with the metal plate 26 expanded as shown in Fig. 3.

The jig 35 comprises a support ring 36 of a diameter smaller than that of the ring 26 in the external force-free state, externally threaded rods 37 threaded in the outer peripheral surface of the ring 36 such that they can be moved radially, and arcuate pushing members 38 each fixed on the outer end of the rod 37. The rod 37 can be rotated by operating the inner end of the rod 37 so as to move radially relative to the ring 36.

The diameter of the ring 26 is expanded by inserting the jig 35 into the ring 26 in the external force-free state, operating the rods 37 to bring the pressing members 38 into contact with the inner surface of the ring 26, and radially outwardly uniformly pressing the members 38 against the inner surface of the ring 26. When the ring 26 is expanded into the state as shown in Fig. 3, the end portions 26b, 26c of the ring 26 are connected together and then the jig 35 is withdrawn from the ring 26 with the pressing members 38 of the jig 35 radially inwardly retracted.

In the ring joint section 26a as shown in Figs. 4(a) to 4(c), a reinforcing plate 41 is welded to a plate 40 welded to one end portion 26b of the ring 26 and having the same width as that of the ring 26. A pair of elongated holes 42 are bored in each of the plates 40 and 41 and a pair of circular holes 43 are formed in the other end portion 26c of the ring 26. A nut 44 is welded to the other end portion of the ring 26 such that it aligns with the hole 43 of the ring 26.

The end portion 26b of the ring 26 is secured to the other end portion 26c thereof by fitting the nuts 44 on the end portion 26b of the ring 26 into the corresponding holes 42 of the plates 40 and 41 and tightening bolts 45 into the corresponding nuts 44 on the end portion 26c of the ring 26. The diameter of the ring 26 so connected can be fine-adjusted within a range defined by the elongated hole 42.

The sealing device so obtained is mounted on the inner surface of the joint portions of the pipes in the following manner.

The operator takes the sealing device to a mounting site with the sleeve 22 and elastic foamed band 30 set as shown in Fig. 6. That is, the sleeve 22 has its diameter reduced with a loop 22a formed inside the sleeve 22 and the elastic foamed band 30 is wrapped around the outer peripheral surface of the end sections 23 of the sleeve 22. In this state, the end portions of the band 30 partially overlap each other as shown in Fig. 6. Since the exudable binder is already impregnated in the elastic foamed band 30, it is not unreasonably exuded, because no particular pressure is applied in this process. Therefore, the setting of the sealing device can be readily effected.

The state of the sleeve 22 as shown in Fig. 6 is retained against an elastic force of the sleeve, because the overlapped band portions are lightly bonded to each other by the binder exuded these to a lesser extent.

With the sleeve 22 and elastic foamed band 30 so set, the sealing device is carried by the operator inside the pipes and positioned with one end section 23 of the sleeve 22 set at one pipe 15 side and the other end section 23 at the other pipe 16 side. By so doing, the joint portions of the pipes 15, 16 are internally covered by the intermediate section 24 of the sleeve 22 over the entire circumference thereof.

The inner surfaces of the joint portions 17 of the pipes 15, 16 are beforehand polished and degreased through the entire circumference thereof.

The sleeve 22 is expanded by the operator into a substantially circular form as shown in Fig. 7. At this time, the overlapped end portions of the elastic foamed band 30 are displaced relative to each other, leaving a smaller length of overlap. In this position, the band 30 is brought into close proximity to, or slightly contacted with, the inner surface of the joint portions of the pipes, and the ring 26 at its diameter-reduced state is fitted in the inner groove 27 of the sleeve 22. The diameter of the ring 26 is expanded by the jig 35 as shown in Fig. 5, causing the elastic foamed band 30 to be radially outwardly pressed against the inner surface of the pipes 15, 16 through the sleeve 22. At this state, the ring 26 has its end portions secured together by the bolt 45 through the joint section 26a, and then the jig 35 is withdrawn from the ring 26.

The pair of sealing lips 28, 29 of the end section 23 are pressed against the corresponding inner surface of the pipes 15, 16 and elastically deformed, causing the band 30 to intimately close the outer groove 31 of the end sections 23, 23 of the sleeve 22. At this state, the elastic foamed band 30 is compressed to squeeze out the exudable binder to permit a clearance in the groove 31 to be filled with the binder. The binder is set after a predetermined time period and the end sections of the sleeve are bonded in an air-tight and water-tight fashion to the corresponding pipe portions so that the sleeve can not be moved in the axial direction.

Where the sealing device of this invention is mounted on the inner surface of the joint portions 17 of the pipes 15, 16, there is a possibility that a gap 46 will be created between the abutting portions of the pipes by a shock, such as an earthquake, in the axial direction, or the joint portions of the pipes will be displaced in the axial direction to leave a clearance there. According to this invention, on the other hand, the intermediate section 24 of the sleeve 22 is expanded in the axial direction as indicated by arrows in Fig. 1 and elastically deformed. Even if such an expansion and deformation occurs, the end sections of the sleeve remain fixed to the pipe portions. For this reason, there is no possibility of a gas leaking out through a possible clearance and thus a serious gas hazard is prevented from occurring.

As already set out above, the intermediate section 24 of the sleeve 22 is formed thinner than the end sections 23, 23 thereof to provide an elastically deformable section, but the following method can be also adopted for this purpose.

That is, the rubber for the sleeve 22 can be vulcanized to such a varying extent that a soft property is given to the intermediate section 24 of the sleeve 22 and a hard property to the end sections 23, 23 of the sleeve 22.

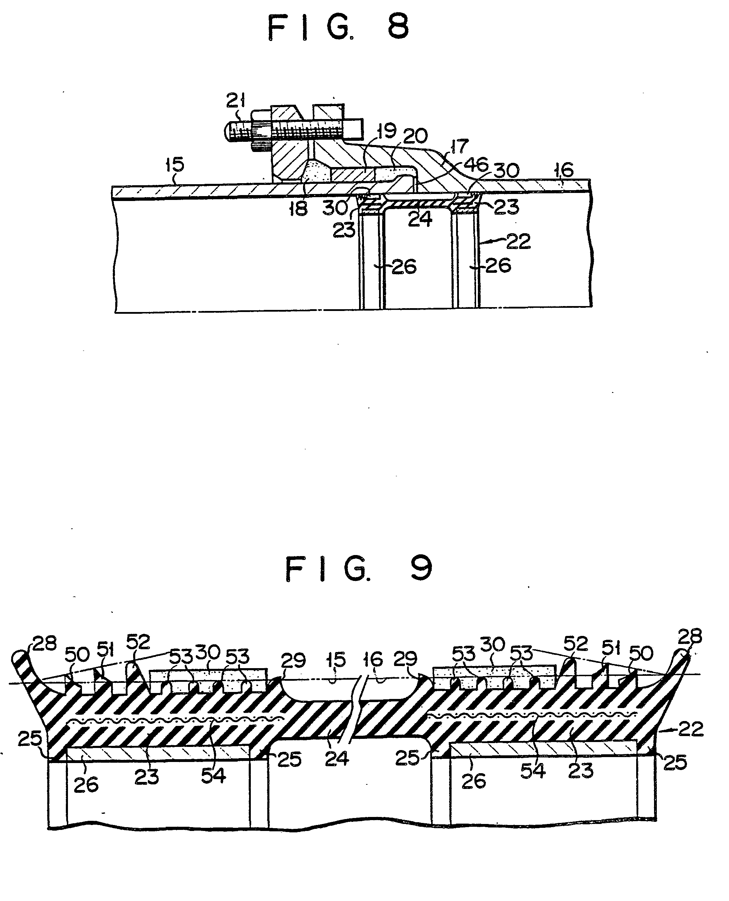

In a second embodiment of this invention as shown in Figs. 8 and 9, like reference numerals are employed to designate parts or elements corresponding to those shown in the first embodiment and further explanation is omitted or a brief explanation will be made as a necessity arises.

A sealing device as shown in Figs. 8 and 9 includes a tubular sleeve 22 made of an elastic material such as synthetic resin, expanding rings 26, 26 made of a steel plate, and elastic, synthetic resin foamed bodies or bands 30, 30. The expanding ring 26 is received in a corresponding inner groove 27 which is defined by a pair of flanges 25, 25. An intermediate section 24 of the sleeve 22 is formed thinner than the end sections 23, 23 of the sleeve 22, and can be expanded in the axial direction of the sleeve 22.

The sealing device is mounted on the inner surfaces of the joint portions 17 of pipes 15, 16 in the same way as in the first embodiment.

The sealing device as shown in Figs. 8 and 9 is different from the sealing device of Fig. 1 in the following respects.

That is, an outer groove 31 defined by a couple of sealing lips 28, 29 is formed on the outer periphery of each end section 23 of the sleeve 22 such that a plurality of flange-like radial projections or ridges 50, 51, 52, 53 spaced apart from each other are integrally formed on the entire circumference of the groove 31. Among these projections, a first group of projections 53 (four projections are shown by way of example) at the side of the intermediate projection 24 of the sleeve 22 has the same configuration and a height not exceeding a plane defined by the inner surface of the pipes as indicated by a dot-dash line in Fig. 9 and a second group of projections 50, 51, 52 (three projections are shown by way of example) has a different height. The projections 50, 51, 52 in said second group are arranged toward the intermediate section 24 of the sleeve in the increasing order of height as indicated by a dot-dash line in Fig. 9 and extended such that they exceed, like the outer lip 28, the plane defined by the inner surface of the pipes. Upon mounting the sealing device on the inner surfaces of the joint portions 17 of the pipes 15, 16 these projections 50, 51, 52 on the end section 23 of the sleeve 22 are brought into pressure contact with the inner surface of the joint portions of the pipes so as to ensure a positive seal. The higher the projection, the more firmly the projection can be contacted with the inner surface of the joint portions of the pipes with a higher sealing effect.

An elastic foamed band 30 is wrapped around that portion of the groove 31 where the first group of projections 53 are located. The first group of projections 53 performs the function of causing the end section 23 of the sleeve 22 to be more firmly pressed onto the inner surface of the joint portions of the pipes and facilitating bonding by a binder which is squeezed out of the band 30. In order to attain the same object, each of the end sections 23 of the sleeve 22 has a slightly projected or stepped surface portion where the band 30 is located.

The sealing device is mounted on the inner surfaces of the joint portions 17 of the pipes 15, 16 and then, the end sections 23 of the sleeve are bonded to the inner surface of the pipes. In the case where a clearance is created at the gap 46 of the pipes, or the pipes are axially displaced relative to each other, due to occurrence of an earthquake etc., the intermediate section 24 of the sleeve 22 is correspondingly elastically deformed, preventing leakage of a fluid flowing in the pipes 15, 16.

Even if a clearance is produced between the foamed body 30 and the inner surface of the pipe, a positive seal is secured by the second group of projections 50, 51, 52 and outer sealing lip 28, providing a high degree of safety against leakage.

Suppose, for example, that a clearance is produced between the outer lip 28 and the inner surface of the pipes through which a high pressure gas flows. In this case, leakage is triply prevented by the projections 50, 51, 52 having a higher sealing effect. Even if in this case the clearance is developed between the outer lip 28 and the first projection 50 and then between the projection 50 and the second projection 51, the gas pressure is rapidly dropped and a complete prevention of leakage is achieved by the third projection having a most intimate sealing effect.

In the second embodiment a strengthening insert piece 54 formed of a metal network is embedded in the end sections 23, 23 of the sleeve 22. By so doing an added hardness or rigidity is given to the end section 23, 23 of the sleeve 22 and thus a higher bonding of the end sections 23, 23 of the sleeve 22 to the inner surfaces of the pipes are allowed. The use of such a strengthening insert piece 54 permits a choice of a softer material for the sleeve and allows a satisfactory elasticity of the intermediate section 24 of the sleeve.

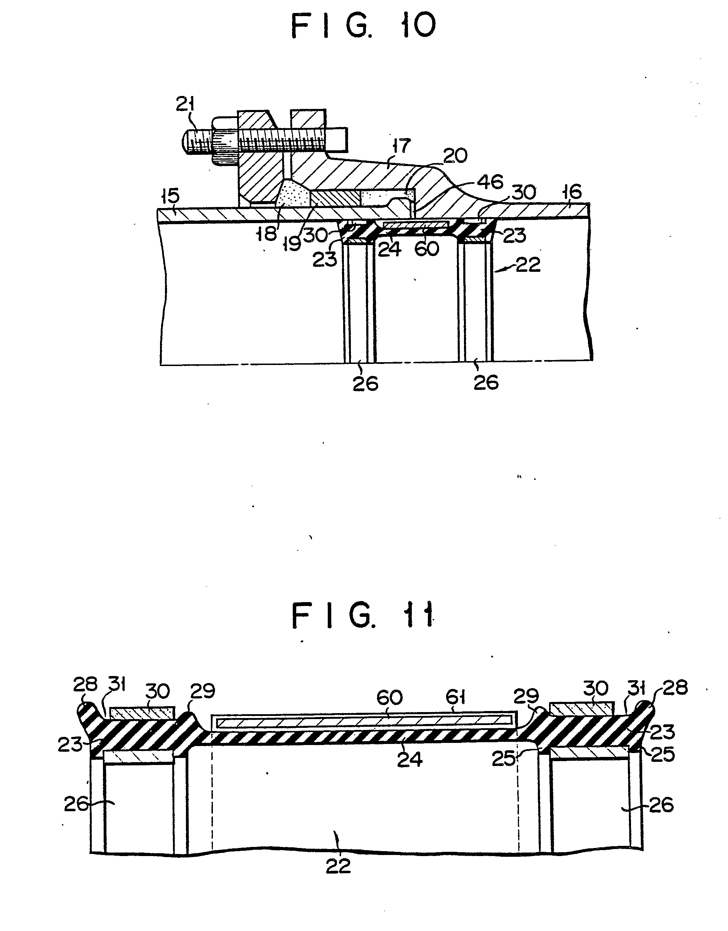

Figs. 10 and 11 show a sealing device according to a third embodiment of this invention. In the third embodiment, like reference numerals are employed to designate parts or elements corresponding to those shown in the first embodiment and further explanation is omitted or a brief explanation will be made as necessary.

A sealing device of Figs. 10 and 11 is mounted on the inner surface of the joint portions 17 of the pipes 15, 16 as shown in Fig. 10. As appreciated from these Figures, this embodiment is fundamentally similar to the first embodiment except for an expansion preventing member 60 as will be described later. An explanation made in connection with the arrangement and function of the first embodiment holds true for this third embodiment.

The above-mentioned expansion preventing member 60 is ring-like in configuration and loosely wrapped around the outer periphery of an intermediate section 24 of a sleeve 22. The member 60 has an axial width substantially equal to that of the intermediate section 24 of the sleeve 22 and serves to prevent an excessive or undue radial expansion, by, for example, high pressure gas, of the intermediate section 24 of the sleeve 22 and thus an undue weakening of the intermediate section 24 of the sleeve 22. To this end, the member 60 has to possess a necessary stiffness and necessary tensile strength. A cloth such as a canvas and cotton cloth is preferable as a material for the member 60. As appreciated from the cross-section of the member 60 in Fig. 11, the member 60 is formed by using such a cloth as a base material and covering it with a thin film-like material 61. The covering material 61 is made of, for example, polyethylene resin or Teflon and provides no substantial adhesion to the intermediate section 24 by an exudable binder impregnated in an elastic foamed body or band 30.

The covering material 61 functions to prevent the member 60 from being bonded to the intermediate section 24 of the sleeve 22 or the inner surface of the pipes 15, 16 even if the binder is squeezed out of the foamed body 30 and flows onto the surface of the intermediate section 24 of the sleeve 22. As a result, an axial expansion of the intermediate section of the sleeve 22 is allowed.

The sealing device is carried inside the pipes 15, 16 with the member 60 wrapped around the outer periphery of the intermediate section 24 of the sleeve 22 and mounted on the inner surfaces of the joint portions 17 of the pipes 15, 16 in exactly the same way as in the first embodiment.

## Claims

1. A sealing device for forming a lining on the joint portions (17) of pipes (15, 16), comprising a tubular sleeve (22) made of an elastic material and having end sections (23, 23) and an intermediate section (24) between the end sections, said end sections of the sleeve being adapted to be brought into contact with the inner surfaces of the joint portions of the pipes, and expanding means (26) provided in the corresponding inner surfaces of the end sections of the sleeve to cause the outer peripheral surfaces of the end sections of the sleeve to be pressed against the inner surfaces of the joint portions of the pipes, characterized in that an elastic foamed body (30) impregnated with an exudable binder is provided around the outer peripheral surface of each end section, (23, 23) of the sleeve (22) in a groove (31) defined by a pair of flange-like projections or eidges (28, 29) provided on the outer peripheral surface of the respective end section (23, 23) so that the foamed body can be compressed by the expanding means (26) against the inner surface of the joint portions (17) of the pipes (15, 16) to cause the binder to be squeezed out of the foamed body to permit the end sections of the sleeve to be bonded to the inner surfaces of the joint portions of the pipes, and in that said intermediate section (24) is thinner than said end sections (23, 23) and is expansible in the axial direction of the sleeve (22).

2. A sealing device according to claim 1, characterized in that said projections or ridges (28, 29) are integrally formed with said sleeve (22).

3. A sealing device according to claim 1 or 2, characterized in that a strengthening insert piece (54) is embedded in each end section (23, 23) of said sleeve.

4. A sealing device according to any one of claims 1 to 3, characterized in that said intermediate section (24) of the sleeve (22) is softer than said end sections (23, 23) of said sleeve (22).

5. A sealing device according to any one of claims 1 to 4, characterized in that a plurality of mutually spaced-apart ring-like further projections or ridges (50, 51, 52, 53) are integrally formed on the outer peripheral surface of each end section (23, 23) of the sleeve (22) and said elastic foamed body (30) is wrapped around at least some (53) of the ring-like projections.

6. A sealing device according to claim 5, characterized in that those ring-like projections (50, 51, 52) not covered by said elastic foamed body (30) are arranged in order of increasing height considered in the direction towards said intermediate section (24).

7. A sealing device according to any one of claims 1 to 6, characterized in that an expansion-inhibiting ring member (60) is provided around the outer peripheral surface of the intermediate section (24) of the sleeve (22) to inhibit radial expansion of the intermediate section of the sleeve.

8. A sealing device according to claim 7, characterized in that said expansion-inhibiting ring member (60) is covered with a coating material (61) which provides substantially no adherence to the intermediate section (24) of the sleeve (22) by said binder.

## Patentansprüche

1. Dichtvorrichtung zum Ausbilden einer Leitung an Anschlußstücken (17) von Rohren (15, 16), umfassend eine rohrförmige Hülse (22), die aus einem elastischen Material hergestellt ist und Endabschnitte (23,23) und einen Zwischenabschnitt (24) zwischen den Endabschnitten aufweist, welche Endabschnitte der Hülse mit den Innenflächen der Anschlußstücke der Rohre in Berührung bringbar sind, und expandierende Mittel (26), die in den entsprechenden Innenflächen der Endabschnitte der Hülse vorgesehen sind, um die äußeren Umfangsflächen der Endabschnitte der Hülse gegendie Innenflächen der Anschlußstükke der Rohre zu drücken, dadurch gekennzeichnet, daß ein mit einem ausscheidbaren Binder imprägnierter elastischer, geschäumter Körper (30) um die Außenumfangsfläche jedes Endabschnittes (23,23) der Hülse (22) in einer Nut (31) vorgesehen ist, die von einem Paar von flanschähnlichen Vorsprüngen oder Rippen (28,29) gebildet wird, welche auf der äußeren Umfangsfläche des jeweiligen Endabschnittes (23,23) vorgesehen sind, so daß der geschäumte Körper durch die expandierenden Mittel (26) gegen die Innenfläche der Anschlußstücke (17) der Rohre (15,16) zusammengedrückt werden kann, um dadurch den Binder aus dem geschäumten Körper auszuquetschen und zu erlauben, daß die Endabschnitte der Hülse an die Innenflächen der Anschlußstücke der Rohre geklebt werden, und daß der Zwischenabschnitt (24) dünner ist als die Endabschnitte (23) und in Axialrichtung der Hülse (22) expandierbar ist.

2. Dichtvorrichtung nach Anspruch 1, dadurch gekennzeichnet, daß die Vorsprünge oder Rippen (28,29) integriert mit der Hülse (22) ausgebildet sind.

3. Dichtvorrichtung nach Anspruch 1 oder 2, dadurch gekennzeichnet, daß ein festigendes Einsatzstück (54) in jedem Endabschnitt (23,23) der Hülse eingebetter ist.

4. Dichtvorrichtung nach einem der Ansprüche 1 bis 3, dadurch gekennzeichnet, daß der Zwischenabschnitt (24) der Hülse (22) weicher ist als die Endabschnitte (23,23) der Hülse (22).

5. Dichtvorrichtung nach einem der Ansrpüche 1 bis 4, dadurch gekennzeichnet, daß eine Vielzahl von gegenseitig voneinander beabstandeten, ringähnlichen weiteren Vorsprüngen oder Ripper (50,51,52,53) integriert an der äußeren Umfangsfläche jedes Endabschnittes (23,23) der Hülse ausgebildet sind, und daß der elastische, geschäumte Körper (30) um zumindest einige (53) der ringähnlichen Vorsprünge gewickelt ist.

6. Dichtvorrichtung nach Anspruch 5, dadurch gekennzeichnet, daß nicht von dem elastischen, geschäumten Körper (30) bedeckte derartige ringähnliche Vorsprünge (50,51,52) vorgesehen sind, deren Höhe in Richtung auf den Zwhschenabschnitt (24) zunimmt.

7. Dichtvorrichtung nach einem der Ansprüche 1 bis 6, dadurch gekennzeichnet, daß ein die Expansion ausschließendes Ringglied (60) um die äußere Umfangsfläche des Zwischenabschnittes (24) der Hülse (22) vorgesehen ist, um eine radiale Expansion des Zwischenabschnittes der Hülse auszuschließen.

8. Dichtvorrichtung nach Anspruch 7, dadurch gekennzeichnet, daß das die Expansion ausschließende Ringglied (60) mit einem Beschichtungsmaterial (61) bedeckt ist, welches im wesentlichen keine Haftung zum Zwischenabschnitt (24) der Hülse (22) durch den genannten Binder vorsieht.

## Revendications

1. Un dispositif d'étanchéité pour former une garniture sur les parties de joint (17) de tuyaux (15,16), comprenant un manchon tubulaire (22) formé d'une matière élastique et comportant des sections d'extrémité (23, 23) ainsi qu'une section intermédiaire (24) entre les sections d'extrémité, lesdites sections d'extrémité du manchon étant adaptées pour être mises en contact avec les surfaces intérieures des parties de joint des tuyaux, et un moyen de dilatation (26) disposé dans les surfaces intérieures correspondantes des sections d'extrémité du manchon pour amener les surfaces périphériques extérieures des sections d'extrémité du manchon à être pressées contre les surfaces intérieures des parties de joint des tuyaux, caractérisé en ce qu'un corps cellulaire élastique (30) imprégné d'un liant exudable est disposé autour de la surface périphérique extérieure de chaque section d'extrémité (23, 23) du manchon (22) dans une gorge (31) délimitée par une paire de saillies ou nervures analogues à des collerettes (28, 29) formées sur la surface périphériqie extérieure de la section d'extrémité correspondante (23, 23) de telle sorte que le corps cellulaire puisse être comprimé par le moyen de dilatation (26) contre la surface intérieure des parties de joint (17) de tuyaux (15, 16) pour que le liant soit expulsé du corps cellulaire de manière que les sections d'extrémité du manchon puissent adhérer aux surfaces intérieures des parties de joint des tuyaux, et en ce que ladite section intermédiaire (24) est plus mince que lesdites sections d'extrémité (23, 23) et est dilatable dans la direction axiale du manchon (22).

2. Un dispositif d'étanchéité suivant la revendication 1, caractérisé en ce que lesdites saillies ou nervures (28, 29) font partie intégrante dudit manchon (22).

3. Un dispositif d'étanchéité suivant la revendication 1 ou 2, caractérisé en ce qu'une pièce rapportée de renforcement (54) est noyée dans chaque section d'extrémité (23, 23) dudit manchon.

4. Dispositif d'étanchéité suivant l'une quelconque des revendications 1 à 3, caractérisé en ce que ladite section intermédiaire (24) du manchon (22) est plus molle que lesdites sections d'extrémité (23, 23) dudit manchon (22).

5. Un dispositif d'étanchéité suivant l'une quelconque des revendications 1 à 4, caractérisé en ce qu'une multiplicité de saillies ou nervures supplémentaires mutuellement esacées et analogues à des roundelles (50, 51, 52, 53) sont formées de façon intégrée sur la surface périphérique extérieure de chaque section d'extrémité (23, 23) du manchon (22) et ledit corps cellulaire élastique (30) est enroulé autour d'au moins quelques-unes (53) des saillies analogues à des rondelles.

6. Un dispositif d'étanchéité suivant la revendication 5, caractérisé en ce que celles des saillies (50, 51, 52) analogues à des rondelles qui ne sont pas recouvertes par ledit corps cellulaire élastique (30) sont disposées dans un ordre croissant de hauteur considéré en direction de ladite section intermédiaire (24).

7. Un dispositif d'étanchéité suivant l'une quelconque des revendications 1 à 6, caractérisé en ce qu'un élément annulaire (60) de neutralisation de dilatation est disposé autour de la surface périphérique extérieure de la section intermédiaire (24) du manchon (22) pour neutraliser la dilatation radiale de la section intermédiaire du manchon.

8. Un dispositif d'étanchéité suivant la revendication 7, caractérisé en ce que ledit élément annulaire (60) de neutralisation de dilatation n'assure sensiblement aucune adhérence dudit liant à la section intermédiaire (24) du manchon (22).

0015 559

# FIG. 1

# FIG. 2

# FIG. 3

FIG.4

(a)

(b)

(c)

FIG. 5    FIG. 6    FIG. 7

# F I G. 8

# F I G. 9

# F I G. 10

# F I G. 11